Europäisches Patentamt

European Patent Office

Office européen des brevets

(19)

(11) Veröffentlichungsnummer: **0 243 800**

**A1**

(12) ## EUROPÄISCHE PATENTANMELDUNG

(21) Anmeldenummer: 87105581.0

(22) Anmeldetag: 15.04.87

(51) Int. Cl.4: **H02K 5/18** , H02K 5/20 , H02K 5/00 , H02K 5/22

(30) Priorität: 23.04.86 CH 1675/86

(43) Veröffentlichungstag der Anmeldung:
04.11.87 Patentblatt 87/45

(84) Benannte Vertragsstaaten:
**AT DE ES FR GB IT**

(71) Anmelder: **Zschokke Wartmann AG**

**CH-5312 Döttingen(CH)**

(72) Erfinder: **Knobel, Robert**
**Gartenstrasse 1065**
**CH-5712 Beinwil am See(CH)**

(74) Vertreter: **EGLI-EUROPEAN PATENT
ATTORNEYS
Horneggstrasse 4
CH-8008 Zürich(CH)**

(54) **Gehäuse für elektrische Maschinen.**

(57) Das Gehäuse (1) weist auf einem Gehäusemantel (6) aufgeschweisste Rippen (7, 12) auf, welche als U-förmiges Profil ausgebildet sind. Die Schenkel (9) der Rippen (7, 12) sind mittels Widerstandsbuckelschweissung auf dem Gehäusemantel (6) befestigt. Die Rippe (12) ist etwas grösser als die andern Rippen (7) und dient als Grundprofil für die Befestigung eines Fussprofiles (13). Durch die Widerstandsbuckelschweissung kann das Gehäuse (1) in rationeller Weise hergestellt werden, wobei der Fuss (11) durch das Grundprofil (12) und das Fussprofil (13) gebildet ist. Durch die Verwendung der U-förmigen Rippen (7, 12) wird der Wärmeübergang verbessert und zudem werden durch die Füsse (11) keine Kühlkanäle versperrt.

FIG. 2

EP 0 243 800 A1

## Gehäuse für elektrische Maschinen

Die Erfindung betrifft ein Gehäuse für eine elektrische Maschine, welches aus einem mit Kühlrippen ausgebildeten Gehäusemantel besteht.

Gehäuse für elektrische Maschinen sind in vielen Ausführungen bekannt. Während aus Gusseisen hergestellte Gehäuse, insbesondere bei elektrischen Maschinen kleinerer Leistung, immer weniger verwendet werden, hat sich vor allem das aus Blech hergestellte Gehäuse durchgesetzt, da es gegenüber dem gegossenen Gehäuse Vorteile aufweist, z.B. kleineres Gewicht, kleineren Fertigungsaufwand und damit kleinere Kosten.

Für die Herstellung von aus Blech hergestellten Gehäusen wird das Blech von einer Rolle aus Bandstahl abgewickelt und in einer Faltenpresse zu Rippenelementen gepresst, welche dann zu meistens kreisrunden Gehäusen geformt und an den Endkanten zusammengeschweisst werden. Diese Gehäuse werden dann noch mit Endflanschen und Füssen versehen, worauf sie in die Montage zur Herstellung elektrischer Maschinen gelangen.

Die aus Blech hergestellten Gehäuse weisen einige Nachteile auf. So ist es nicht möglich, wie bei Aluminium-oder Gusseisen-Gehäusen die Füsse und den Klemmenkasten zusammen mit der Fertigung des Gehäuses herzustellen. Vielmehr benötigt man hierzu eine zusätzliche Operation. Die Füsse werden hierbei auf die Rippen aufgesetzt und mit den Spitzen verschweisst. Dies bedingt jedoch eine Mindestwandstärke für die Rippen, damit sie für die Uebertragung der auftretenden Kräfte geeignet sind. Die übrigen nicht beanspruchten Rippen sind dann zu stark dimensioniert.

Hier setzt die Erfindung ein, der die Aufgabe zugrundeliegt, Gehäuse für elektrische Maschinen der eingangs beschriebenen Art so auszugestalten, dass die Nachteile der aus Rippenelementen aus Stahlblech geformten Blechgehäuse vermieden werden, ohne dass dadurch der Fertigungsaufwand erhöht und die Wärmeübertragung des Gehäuses vermindert würde. Weiter soll die Befestigung der Füsse bzw. Fussteile in der gleichen Operation wie die Herstellung der Rippen ermöglicht werden.

Diese Aufgabe wird gemäss der Erfindung dadurch gelöst, dass die Rippen mindestens teilweise als U-förmiges Profil ausgebildet sind, dessen durch einen Steg verbundene Schenkel an ihrem freien Rand auf die Aussenfläche des Gehäusemantels aufgesetzt und mindestens teilweise mit demselben verschweisst sind. Dadurch wird erreicht, dass am gesamten Gehäuseumfang Profile, gegebenenfalls verschiedener Form und Grösse, aufgeschweisst werden, von denen einige als Abstützung für den Fuss verwendet werden können.

Zweckmässig ist der freie Rand der Schenkel mindestens stellenweise mit Buckeln versehen und die Schenkel an diesen Buckelstellen mit dem Gehäusemantel buckelgeschweisst. Durch die Anwendung der Buckelschweissung wird erreicht, dass bei aus Rippenelementen hergestellten Blechgehäusen Rippen mit Buckelschweissung auch für die Befestigung der Füsse oder zur Anordnung des Klemmenkastens, verwendet werden können.

Die Erfindung ist in der Zeichnung in einigen Ausführungsbeispielen dargestellt und nachfolgend beschrieben. Es zeigen:

Fig. 1 eine schematisch dargestellte Seitenansicht einer elektrischen Maschine,

Fig. 2 einen schematisch dargestellten Teilschnitt der elektrischen Maschine nach Fig. 1 längs der Linie II - II in vergrössertem Massstab,

Fig. 3 einen schematisch dargestellten Teilschnitt einer weiteren Ausführungsform des Gehäuses der Maschine nach Fig. 1 längs der Linie III - III in vergrössertem Massstab,

Fig. 4 eine schematische Darstellung eines Gehäusefusses bei einem aus einem Rippenelement hergestellten Gehäuse,

Fig. 5 eine schematisch dargestellte Ansicht zweier Rippenprofile mit an verschiedenen Stellen ausgebildeten Buckeln für die Buckelschweissung,

Fig. 6 ein schematisch dargestelltes Fussprofil in räumlicher Darstellung und

Fig. 7 ein schematisch dargestelltes weiteres, als Fussprofil an einem Gehäuse für eine elektrische Maschine verwendbares Profil.

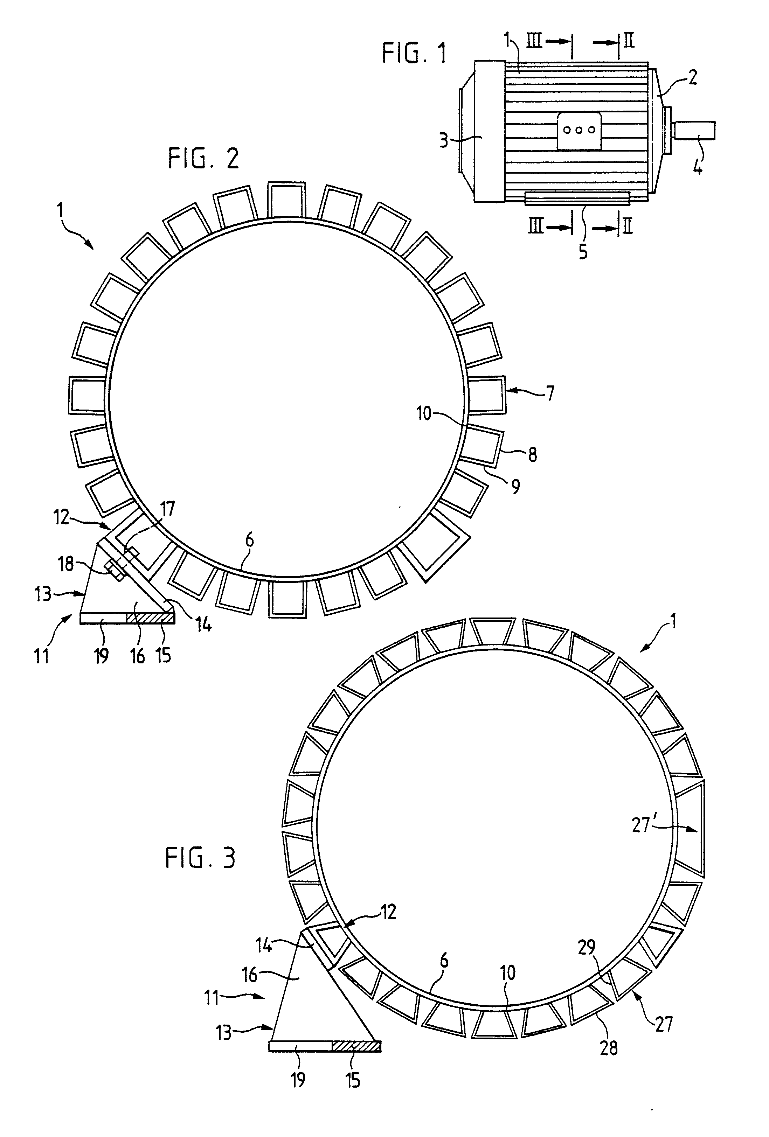

Die in Fig. 1 dargestellte elektrische Maschine, z.B. ein Elektromotor, weist die für elektrische Maschinen bekannte Ausführungsform auf. Es setzt sich somit aus einem Gehäuse 1 und zwei Lagerschilden 2 (nur einer sichtbar) zusammen. Eine Ventilatorhaube 3 dient der Abdeckung eines darunterliegenden Ventilators für die Kühlung der elektrischen Maschine. Das Gehäuse 1 ist auf einen Stator aufgesetzt, welcher einen Rotorkörper mit einer Welle 4 umgibt. Die elektrische Maschine weist zwei Füsse 5 (nur einer sichtbar) auf, mit welchen die elektrische Maschine auf einer Unterlage befestigbar ist.

Aus Fig. 2, welche einen Querschnitt der Maschine nach Fig. 1 zeigt, ist der Aufbau des Gehäuses 1 ersichtlich. Das Gehäuse 1 setzt sich aus einem Gehäusemantel 6 und aus auf demselben aufgesetzten Rippen 7 zusammen. Die Rippen 7 sind derart angeordnet, dass ihre Stege 8 nach aussen gerichtet sind, während die an den Stegen 8 anschliessenden Schenkel 9 nach einwärts gerichtet sind und mit ihrem Rand 10 am Gehäusemantel 6 angeschweisst sind.

Aus Fig. 2 ist weiter ersichtlich, dass das Gehäuse 1 auf zwei Füssen 11 (nur einer dargestellt) abgestützt ist, die sich aus einem Grundprofil 12 und einem Fussprofil 13 zusammensetzen. Das Grundprofil 12 ist gleich ausgebildet wie die übrigen Rippen 7, weist jedoch eine etwas grössere Form und eine etwas grössere Wandstärke auf. Das Fussprofil 13 besteht aus zwei Schenkeln 14, 15, die durch eine oder mehr Stützwände 16 versteift sind. Der gehäuseseitige Schenkel 14 weist Bohrungen 17 zur Aufnahme einer Schraube 18 zum Zusammenschrauben des Grundprofils 12 mit dem Fussprofil 13 auf. Im bodenseitigen Schenkel 15 sind Schlitze 19 für die Befestigung des Gehäuses 1 auf einer nicht dargestellten Unterlage vorgesehen.

Fig. 3 zeigt eine weitere Ausführungsform des Gehäuses 1. Auf dem Gehäusemantel 6 sind wie bei der Ausführung nach Fig. 1 Rippen 27 aufgesetzt und mit dem Gehäusemantel 6 verschweisst. Der Unterschied besteht darin, dass die Schenkel 28 der Rippen 27 nicht parallel, sondern gegeneinander geneigt sind, so dass ein trapezförmiges Profil entsteht. Diese Ausführung erlaubt, den Abstand zwischen den Stegen 29 kleiner zu halten, so dass mehr Rippen auf dem Gehäusemantel 6 angeordnet werden können. Zudem ist die Kühlung besser, da die Luft zwischen zwei Profilen besser geführt ist. Wird, siehe Fig. 3, eine Rippe mit breiterem Steg 27' angeordnet, z.B. zur Verwendung als Klemmenbrett, kann auch in diesem Fall die gleiche Zahl Rippen 27 verwendet werden wie bei der Ausführung nach Fig. 2.

In Fig. 3 ist der Fuss 11 ähnlich ausgebildet wie in Fig. 2, wobei jedoch das Grundprofil 12 in der Form gleich wie die übrigen Rippen 27, jedoch mit grösserer Wandstärke ausgebildet ist. Das Fussprofil 13 ist ebenfalls aus zwei Schenkeln 14, 15 und Stützwänden 16 zusammengesetzt, wobei der gehäuseseitige Schenkel 14 sich nicht bis zum bodenseitigen Schenkel 15 erstreckt.

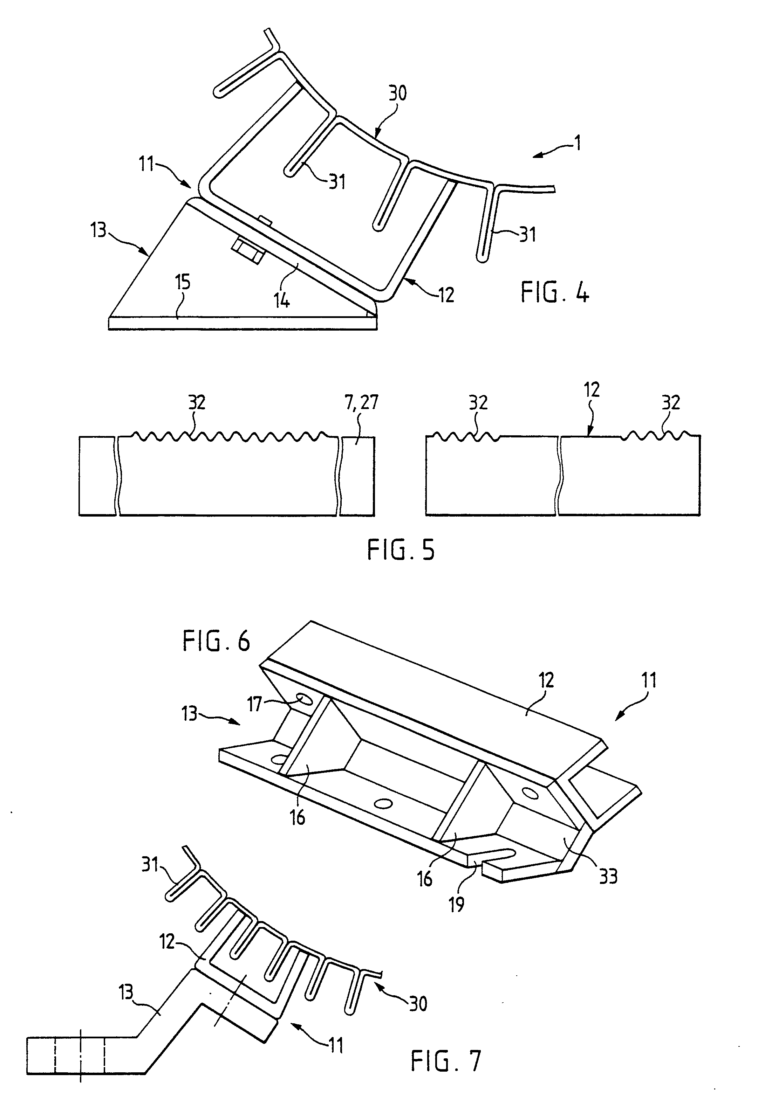

In Fig. 4 ist dargestellt, dass bei einen aus einem Rippenmantel 30 bestehenden Gehäuse 1 von der Fusskonstruktion gemäss Fig. 2 und 3 Gebrauch gemacht werden kann. Hierzu wird ein als U-förmiges Profil ausgebildetes Grundprofil 12 mit seinen Schenkeln zwischen die Rippen 31 des Rippenmantels 30 eingeführt und verschweisst. An dem Grundprofil 12 kann dann in gleicher Weise wie in Fig. 2 das Fussprofil 13 befestigt werden.

In Fig. 5 sind zwei der U-förmigen Rippen 7, 27 bzw. 12 dargestellt, die an dem freien Rand der Schenkel 9 mit Buckeln 32 versehen sind, mit denen die Schweissverbindung mit dem Gehäusemantel 6 vorgenommen wird. Die Anwendung der Buckelschweissung im vorliegenden Fall ist besonders günstig, da wegen der symmetrischen Form der Rippen 7, 27 ein gleichmässiger Druck ausgeübt werden kann, so dass eine einwandfreie Schweissung zustandekommt. Wie aus Fig. 5 ersichtlich ist, werden die freien Ränder der Schenkel 9 nur stellenweise mit Buckeln 32 versehen, d.h. z.B. dort wo Kräfte eingeleitet werden, z.B. bei den Grundprofilen 12 an den beiden Enden und bei den übrigen Rippen 7, 27 nur in der Mitte, um damit eine gute Wärmübertragung zu erreichen. Eine verbesserte Wärmeübertragung wird dadurch erreicht, dass die Buckel 32 an den Schenkeln der Profile mit gleicher Teilung, jedoch zueinander versetzt angeordnet werden. Dieselbe Anordnung ist auch bei benachbarten Profilen anwendbar. Die Form der Buckel 32 kann verschieden ausgebildet sein; eine geeignete Form stellen z.B. Buckel in Dreieckform mit etwa 8 - 16 mm Buckelhöhe dar.

In Fig. 6 ist ein weiteres Fussprofil 13 dargestellt, das zwischen den beiden Schenkeln 14, 15 einen Zwischenschenkel 33 aufweist. Durch die Verwendung von Fussprofilen 13, 33 ist es möglich, unterschiedliche Lagen der Fussprofile 13 zu erreichen, indem die Befestigungsbohrungen nicht symmetrisch, sondern versetzt angeordnet werden, so dass durch Austausch der beiden Fussprofile 13 zwei verschiedene Abstützungslagen der elektrischen Maschine erreicht werden.

In Fig. 7 ist dargestellt, dass das Fussprofil 13 auch anders, etwa annähernd S-förmig, ausgebildet werden kann, jedoch sind noch weitere Profilformen denkbar.

Est ist auch möglich, ausser den in Fig. 2 und 3 angeordneten Grundprofilen 12 weitere Grundprofile 12 am Umfang des Gehäusemantels 6 anzuordnen. Damit ergibt sich die Möglichkeit, die Fussprofile 13 so anzuordnen, dass je nach Bedarf das Profil 27 mit den Stator-und Rotorklemmen und damit des Klemmenkastens links, rechts oder oben liegt.

Durch die beschriebene Ausbildung der Rippen 7, 27 des Gehäuses 1 wird eine rationelle Fertigung erreicht. Die Wärmeübertragung wird durch die geschlossenen Profile verbessert. Zudem werden durch das Grundprofil 12 keine Kühlkanäle versperrt. Das Widerstandsbuckelschweissen bewährt sich in diesem Anwendungsfall, wobei es vorteilhaft ist, dass es auch bei engen Kühlkanälen ausgeführt werden kann. Die gleichmässige Verschweissung ist durch die symmetrische Profilform gewährleistet, durch welche ein gleichmässiger Anpressdruck und ein gleichmässiger elektrischer Strom erreicht wird. Es sei noch erwähnt, dass mit dem aus dem Grundprofil 12 und dem Fussprofil 13 zusammengesetzten Fuss 11 eine leichte Positionierung auch ohne grosse Bearbeitungsgenauigkeit erreicht werden kann. Der aus Grund-und Fussprofil 12. 13 bestehende Fuss erlaubt es sogar, das Fussprofil aus einem Blech zu pressen und damit auf eine spanende Bearbeitung zu verzichten, ohne dadurch eine nachteilige Ungenauigkeit in Kauf nehmen zu müssen.

Die nur über einen Teil der Profillänge reichende Schweissung lässt daneben einen Spalt frei, durch den beim Tauchen des Gehäuses 1 in ein Lack-oder Farbbad der Lack oder die Farbe überall eindringen und dadurch als zusätzlicher Korrosionsschutz wirken kann.

## Ansprüche

1. Gehäuse (1) für eine elektrische Maschine, welches aus einem mit Kühlrippen (7, 12, 27, 27') ausgebildeten Gehäusemantel (6) besteht, dadurch gekennzeichnet, dass die Rippen (7, 12, 27, 27') mindestens teilweise als U-förmiges Profil ausgebildet sind, dessen durch einen Steg (8, 28) verbundene Schenkel (9, 29) an ihrem freien Rand (10) auf die Zylinderfläche des Gehäusemantels (6) aufgesetzt und mindestens teilweise mit demselben verschweisst sind.

2. Gehäuse nach Anspruch 1, dadurch gekennzeichnet, dass der freie Rand (10) der Schenkel (9, 29) mindestens stellenweise mit Buckeln (32) versehen und die Schenkel an diesen Buckelstellen mit dem Gehäusemantel widerstandsbuckelgeschweisst sind.

3. Gehäuse nach Anspruch 1 oder 2, dadurch gekennzeichnet, dass die Rippen (7, 12, 27, 27') nur für einen Teil ihrer Länge, z.B.an den kraftübertragenden Stellen in der Nähe der Lagerschilde (2) der elektrischen Maschine, widerstandsbuckelgeschweisst sind.

4. Gehäuse nach einem der Ansprüche 1 bis 3, dadurch gekennzeichnet, dass mindestens diejenigen Rippen, welche ein Grundprofil (12) für die Füsse (11) der elektrischen Maschine bilden, als U-förmige Profile ausgebildet sind, deren Steg (8) als Abstützung für eine Fussprofil (13) dient.

5. Gehäuse nach einem der Ansprüche 1 bis 4, dadurch gekennzeichnet, dass die Wandstärke und die Dimensionen des Grundprofiles (12) grösser sind als die entsprechenden Masse der weiteren Rippen (7, 27, 27').

6. Gehäuse nach Anspruch 4 oder 5, dadurch gekennzeichnet, dass das Fussprofil (13) als ein mindestens angenähertes Winkelprofil ausgebildet ist, bei welchem der eine Schenkel (15) die Bodenauflage bildet und auf dem andern Schenkel (14) das Grundprofil (12) abgestützt ist.

7. Gehäuse nach einem der Ansprüche 1 bis 6, dadurch gekennzeichnet, dass die als U-förmige Profile ausgebildeten Rippen (12, 27, 27') mit nichtparallelen, vorzugsweise gegeneinander geneigten Schenkel (29) versehen sind, die an ihrem freien Ende (10) einen kleineren Abstand als im Bereich des Steges (28) aufweisen.

8. Gehäuse nach einem der Ansprüche 1 bis 7, dadurch gekennzeichnet, dass mindestens eine U-förmige Rippe (27') zur Anordnung der Stator-und/oder Rotorklemmen bzw. eines Klemmenkastens mit einem breiteren Steg als die weiteren Rippen (7, 27) ausgebildet ist.

9. Gehäuse nach einem der Ansprüche 4 bis 8, dadurch gekennzeichnet, dass von den mit grösserer Dimensionen ausgeführten Profilen (12, 27') mehrere am Umfang des Gehäusemantels (6) angeordnet sind, zwekcs wahlweiser Anordnung der Fussprofile (13) bezüglich der Lage der Rippe (27') bzw. Rippen für die Stator-und/oder Rotorklemmen bzw. den Klemmenkasten.

10 Gehäuse nach einem der Ansprüche 1 bis 9, dadurch gekennzeichnet, dass die Buckel (32) an den Schenkeln (9, 29) der U-förmigen Profile gleiche Teilung aufweisen, wobei die Lage der Buckel der beiden Schenkel und/oder benachbarter Profile um die halbe Teilung zueinander vresetzt ist.

0 243 800

FIG. 1

FIG. 2

FIG. 3

0 243 800

FIG. 4

FIG. 5

FIG. 6

FIG. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | PATENT ABSTRACTS OF JAPAN, Band 9, Nr. 89 (E-309)[1812], 18. April 1985; & JP-A-59 220 053 (MITSUBISHI DENKI K.K.) 11-12-1984 . * Zusammenfassung; Figuren 2A-5B * | 1,2 | H 02 K 5/18<br>H 02 K 5/20<br>H 02 K 5/00<br>H 02 K 5/22 |
| Y | IDEM | 3 | |
| A | IDEM | 10 | |
| | --- | | |
| Y | PATENT ABSTRACTS OF JAPAN, Band 9, Nr. 89 (E-309)[1812], 18. April 1985; & JP-A-59 220 055 (MITSUBISHI DENKI K.K.) 11-12-1984 · * Zusammenfassung; Figuren 2A-5B * | 3 | |
| | | | RECHERCHIERTE SACHGEBIETE (Int. Cl.4) |
| A | IDEM | 10 | H 02 K |
| | --- | | |
| X | FR-A-1 490 602 (MOTEURS DROUARD) * Seite 2, rechte Spalte, Zeile 38 - Seite 3, linke Spalte, Zeile 53; Seite 4, linke Spalte, Zeilen 21-31; Figuren 1-11,16 * | 1,4,5, 7-9 | |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 22-05-1987 | TIO K.H. |

# EUROPÄISCHER RECHERCHENBERICHT

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | US-A-1 870 237 (CHERVENKA) <br> * Seite 1, Zeilen 52-67; Seite 1, Zeile 86 - Seite 2, Zeile 8; Figuren 1-4 * | 1,4 | |
| Y | | 6 | |
| | --- | | |
| Y | FR-A-2 327 665 (UNELEC) <br> * Seite 4; Figuren 1,2 * | 6 | |
| | --- | | |
| A | DE-C- 945 775 (STARMAN) <br> * Seite 2, Zeilen 59-70; Figuren 1,2 * | 6 | |
| | --- | | |
| A | FR-A-2 362 515 (ROBERT BOSCH GmbH) <br> * Seite 3, Zeile 2 - Seite 4, Zeile 7; Seite 4, Zeilen 35-39; Figuren 1,3 * | 10 | RECHERCHIERTE SACHGEBIETE (Int. Cl.4) |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 22-05-1987 | TIO K.H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82